# EUROPEAN PATENT APPLICATION

(11) **EP 2 639 247 A1**
(43) Date of publication of application: **18.09.2013**
(21) Application number: 12159862.7
(22) Date of filing: 16.03.2012
(51) Int. Cl.: C08F 2/24, C08F 2/60, C08F 32/08, C08J 9/00

(54) **Method for producing porous structures**

(71) Applicant: Technische Universität Graz, 8010 Graz (AT)
(72) Inventor: Kovacic, Sebastijan, 2000 Maribor (SI); Krajnc, Peter, 3325 Sostanj (SI); Slugovc, Christian, 9020 Klagenfurt (AT)
(74) Representative: Sonn & Partner Patentanwälte

(57) **Abstract**

The present invention relates to a method for producing a three-dimensional porous structure comprising the step of polymerizing at least one polymerizable monomer in a monomer phase of a monomer-in-water high internal phase emulsion in the presence of a polymerization initiator, wherein the at least one polymerizable monomer is at least one polymerizable multicyclic olefin monomer with at least two cycloolefin rings with at least two reactive double bonds and wherein the emulsion comprises a surfactant in the range of 0.1 vol.% to 8 vol.% based on the quantity of the polymerizable monomer in the emulsion.

## Description

The present invention relates to a method for producing a three-dimensional porous structure.

Emulsions are heterogeneous dispersions in which drops of liquid are dispersed in continuous immiscible liquid phase of different composition. The dispersed phase is sometimes referred to as internal phase and the continuous phase as the external phase. The simplest emulsion structures are droplets of water, in case of water-in-oil (W/O) emulsions or droplets of oil, in case of oil-in-water (O/W) emulsions. High Internal Phase Emulsions (HIPE) are an interesting class of emulsions usually characterized by an internal phase volume fraction exceeding 0.74 of total emulsion volume. The internal phase volume fraction can also vary in the range between 0.40 and 0.70. In that case we have medium internal phase emulsions (MIPE) or low internal phase emulsions (LIPE) if internal phase volume fraction goes lower than 0.40. The internal phase droplets act as a template around which polymerization occurs. After polymerization, the internal phase is removed, leaving voids in place of the internal phase droplets and thus providing a highly porous structure. These materials are known as polymerized HIPEs or polyHIPEs. An intensely study of high internal phase emulsions has been carried out and the basic theory behind them has been discussed by K. J. Lissant in "Surfactant Science Series", Volume 6, "Emulsion and Emulsion Technology", Part 1, edited by K. J. Lissant, Marcel Deckker Inc., N.Y., 1974. Formation of the stable high internal phase emulsion is a mostly kinetic concept while all emulsions and especially HIPEs are known as metastable thermodynamic systems. It means that with the time the dispersed and the continuous phases will macroscopically phase-segregate. The continuous phase of a HIPE is the minority phase in terms of volume and stabilization against internal phase coalescence is necessary. This is typically achieved by the addition of non-ionic surfactants. The amount of surfactant in the system is crucial from two perspectives:
● first, if insufficient surfactant amount is employed, rather unstable emulsions are formed
● and second, insufficient surfactant amount will generate closed voids inside the polymerized HIPE

Commonly large fractions of expensive surfactant (5-30 vol.% of the organic phase) are required to stabilize HIPEs effectively. Conventional surfactants have an amphiphilic molecular structure and stabilize an emulsion by taking position specifically at the oil/water interface to minimize the interfacial energy, thereby acting to prevent droplet coalescence. Increasing concentration of surfactant leads to increased viscosity of the continuous phase which results in the obstruction of Brownian motion. Brownian motion enables droplets to come into contact with each other and this can lead to the emulsion instability. Another positive side of increased concentration of the surfactant in the continuous phase of HIPE is to provide a barrier which disturbs the van der Walls interactions between droplets. The surfactant amount also influences the pore nature of polyHIPE materials, which can be varied between closed-pore (without windows) and open-pore. Work done by Williams and Wrobleski (Williams et al, Langmuir 4: 1988, 656-662) suggested that styrene/DVB polyHIPE materials even at 0.97 of internal phase volume fraction produced closed-pore materials at low surfactant concentration (lower than 5 vol.%). It was found that internal phase volume ratio plays an important role but surfactant concentration is even more important. Increasing the proportion of surfactant causes the thinning of oil (monomer) layer between droplets and at some critical point of added surfactant the monomer layer becomes very thin. The polymer film which forms during the polymerization of the continuous phase shrinks slightly because of monolith volume contraction and consecutively breaks between neighboring former droplets to form interconnecting pores (windows) (Cameron et al, Colloid. Polym. Sci. 274:1996, 592-595).

In US 2003/00639319 it is suggested to use surfactant, preferably in the range of 1-30 parts by mass, and more preferably in the range of 3-15 parts by mass, based on 100 parts by mass of the whole monomer component comprising a polymerizing monomer and a cross-linking monomer. The quantity of the surfactant to be used cannot fall short of 1 part by mass, because the shortage will result in rendering the high dispersibility of the HIPE unstable or preventing the surfactant from manifesting fully satisfactorily the action and the effect inherent therein. Conversely, if the quantity of the surfactant to be used exceeds 30 parts by mass, the excess will possibly result in rendering the produced porous polymer excessively brittle. Further, this excess will fail to contribute to economy because it cannot be expected to bring a proportionate addition to the effect inherent therein.

Up to date, 20 vol.% of the surfactant amount according to the emulsion volume is considered as being an optimum concentration for obtaining stable HIPE and open-cell polyHIPE. Suboptimal results were also obtained by applying between 10-30 vol.% of the surfactant. Preparation of water-in-oil HIPEs under such conditions is described in US 4,522,953. However, substantial amounts of surfactants can present a problem with regards to polymer purification after curing and can add price to the final product in the case of an expensive surfactant. There is also an environmental issue in the art of HIPEs that should be prepared without or minimum use of the surfactant.

PolyHIPEs have an accessible network with a continuous pore structure and a high pore volume (up to 10 cm³/g). The morphologies of polyHIPEs are complex while having hierarchical interconnected pore structure with large voids, interconnecting windows between each voids and its neighbours and secondary pores, within the polymer skeleton. Due to highly interconnected pore structure and extremely low foam density (> 0.1g/cm3) the mechanical properties of polyHIPEs are rather poor and are generally considered as insufficient for many practical applications. While it is naturally recommended to have the foam having interconnected cell size without losing its mechanical properties (Lakes, Nature 361: 1993, 511-515), much work has been devoted to overcome poor polyHIPE's mechanical properties without any loss of material's pore structure and interconnectivity. The methods proposed were to impose higher agitation speed during the preparation of HIPEs (Deleuze et al, Colloid. Polym. Sci. 286: 2008, 1273-1280) or to increase the viscosity of continuous phase by increasing surfactant concentration. Further on, mechanical properties were improved through the synthesis of nano-composites or by changing the internal/external phase volume ratio (US 2010/0261803 Al) or by using monomers capable of forming additional cross links over hydrogen bonds (US 2011/0130534 Al).

It is an object of the present invention to provide methods and means to overcome the drawbacks of the prior art, in particular concerning mechanical stability.

Therefore the present invention relates to a method for producing a three-dimensional porous structure comprising the step of polymerizing at least one polymerizable monomer in a monomer phase of a monomer-in-water high internal phase emulsion in the presence of a polymerization initiator, wherein the at least one polymerizable monomer is at least one polymerizable multicyclic olefin monomer with at least two cycloolefin rings with at least two reactive double bonds and wherein the emulsion comprises a surfactant in the range of 0.1 vol.% to 8 vol.% based on the quantity of the polymerizable monomer in the emulsion.

It turned out that the amount of the surfactant strongly influences the mechanical properties of such three-dimensional porous structure where Young's modules were found to decrease upon increasing surfactant concentration. Using a surfactant in the range of 0.1 vol.% to 8 vol.% based on the quantity of the polymerizable monomer in the emulsion allows to obtain porous structures with good mechanical properties (high stability) although being highly porous with tunable void sizes. The combination of good mechanical properties and tunable void sizes constitute an ideal starting point for using the porous structures in many applications e.g. scaffolds for cell culturing and tissue engineering, supports for catalysts and reagents, materials for separation or low dielectric constant materials.

General methods to obtain three-dimensional porous structures as defined herein are known to the person skilled in the art (e.g. Kovacic S et al., Chem Commun 46(2010):7504-7506; Kovacic S et al., Polym Chem 3(2012):325-328). In these methods the polymerizable multicyclic olefin monomer is cross-linked via olefin addition and/or olefin metathesis so that no additional cross-linker, usually used in the preparation of polyHIPEs, is necessary.

According to a preferred embodiment of the present invention the emulsion used to obtain the three-dimensional porous structures comprises 0.1 vol.% to 7 vol.%, 0.1 vol.% to 6 vol.%, 0.1 vol.% to 5, vol.% 0.1 vol.% to 4 vol.%, 0.2 vol.% to 8 vol.%, 0.2 vol.% to 7, vol.%, 0.2 vol.% to 6 vol.%, 0.2 vol.% to 5 vol.%, 0.2 vol.% to 4 vol.%, 0.25 vol.% to 8 vol.%, 0.25 vol.% to 7, vol.% 0.25 vol.% to 6, vol.% 0.25 vol.% to 5, vol.% 0.25 vol.% to 4, surfactant based on the quantity of the polymerizable monomer in the emulsion.

According to a preferred embodiment of the present invention the polymerizable multicyclic olefin monomer is selected from the group consisting of dicyclopentadiene, norbornen, norbornadien, cycloocten, cyclooctadien, 5-ethylidene-2-norbornene and combinations thereof.

According to a further preferred embodiment of the present invention the polymerizable multicyclic olefin monomer is dicyclopentadiene, which is combined with at least one polymerizable multicyclic olefin monomer selected from the group consisting of norbornen, norbornadien, cycloocten, cyclooctadien and 5-ethylidene-2-norbornene.

The emulsion used in the method of the present invention may comprise one single type of polymerizable multicyclic olefin monomer or more than one type thereof. It is particularly preferred that one monomer is dicyclopentadiene and one or more comonomers are selected from the group consisting of norbornen, norbornadien, cycloocten, cyclooctadien and 5-ethylidene-2-norbornene

According to another preferred embodiment of the present invention the monomer phase comprises 50% to 100%, preferably 60% to 100%, more preferably 70% to 100%, even more preferably 80% to 100%, dicyclopentadiene and 0% to 50%, preferably 0% to 40%, more preferably 0% to 30%, even more preferably 0% to 20%, at least one polymerizable multicyclic olefin monomer selected from the group consisting of norbornen, norbornadien, cycloocten, cyclooctadien and 5-ethylidene-2-norbornene.

The emulsion used in the method of the present invention comprises preferably at least 50%, at least 60%, at least 70%, at least 75%, at least 80%, at least 85%, at least 90%, at least 95%, or even 100% dicyclopentadiene.

According to a preferred embodiment of the present invention the polymerization initiator is activated/active at a temperature of at least 40°C, preferably of at least 50°C, more preferably of at least 60°C.

In order to avoid that the polymerization reaction starts when the polymerizable multicyclic olefin monomer is contacted with the polymerization initiator, it is preferred to use polymerization initiators which can be activated at a specific temperature of, e.g., at least 40°C. This is particularly advantageous because it allows to prepare the emulsion before the polymerisation reaction starts.

According to a further preferred embodiment of the present invention the polymerization step is performed at a temperature between 40°C and 99°C, preferably between 45°C and 95°C, more preferably between 50°C and 90°C, even more preferably between 70°C and 85°C, in particular at a temperature of 80°C.

After the polymerization of the emulsion the polymer is cured at a temperature of more than 60°C, preferably of more than 70°C, even more preferred of more than 80°C. The maximum curing temperature should not exceed 99°C.

According to another preferred embodiment of the present invention the polymerization initiator is a ruthenium carbene metathesis initiator.

According to a preferred embodiment of the present invention the metal carbene metathesis initiator/catalyst is selected from the group consisting of (H2IMes)-(PCy3)Cl2Ru(3-phenyl-indenylid-1-ene) (H2Imes = N,N-bis(mesityl) 4,5-dihydroimidazol-2-yl), (SPY-5-34)-dichloro-(K2(C,O)-(2-iso-propyl ester-5-methoxy benzylidene)-(1,3-bis(2,4,6- trimethylphenyl)-4,5-dihydroimidazol-2-ylidene)-ruthenium and combinations thereof.

According to another preferred embodiment of the present invention the surfactant is a non-ionic surfactant.

According to a further preferred embodiment of the present invention the surfactant has a molecular weight of 500 to 10000 g/mol, preferably of 1000 to 8000 g/mol, even more preferably of 2000 to 5000 g/mol.

The surfactant is preferably selected from the group consisting of poloxamers, more preferably (poly(ethylene glycol)-block-poly(propylene glycol)-block-poly(ethylene glycol).

According to a particularly preferred embodiment of the present invention the total pore volume in respect to the overall volume of the at least one polymerizable monomer varies from 40% to 90%, preferably from 50% to 90%, more preferably from 70% to 90%, even more preferably from 80% to 90%. Of course, the total pore volume in respect to the overall volume of the at least one polymerizable monomer may vary up to about 93% or 94%.

Another aspect of the present invention relates to a three-dimensional porous polymer structure comprising voids (pores) having an average void size of more than 4 µm, preferably more than 5 µm, and an average window size between 1 and 50 µm. According to a preferred embodiment of the present invention the voids have an average void size of more than 7.5 µm, preferably more than 9 µm.

According to a further preferred embodiment of the present invention the voids have an average void size of 5 to 150 µm, preferably of 7.5 to 150 µm, more preferably of 9 to 130 µm, even more preferably of 10 to 120 µm.

The voids (pores) of the structures of the present invention have an average window size between 1 and 50 µm, preferably between 1 and 40 µm, more preferably between 1 and 25 µm, even more preferably between 1 and 20 µm, 1 and 10 µm, 1 and 5 µm.

According to a preferred embodiment of the present invention the elastic modulus of the structure is between 25 and 1000 MPa, preferably between 60 and 150 MPa, preferably between 70 and 1000 MPa, more preferably between 80 and 400 MPa, even more preferably between 90 and 900 MPa, most preferably between 95 and 900 MPa. These ranges refer to structures in their oxidised form.

According to a preferred embodiment of the present invention the elastic modulus of the structure in their pristine state (i.e. unoxidized) is at least 25 MPa, preferably at least 50 MPa, more preferably at least 80 MPa, even more preferably at least 100 MPa. Upon oxidation, the eleastic modulus of the structures is at least 170 MPa, preferably at least 200 MPa and even more preferably at least 400 MPa. The elastic modulus was determined by stress strain tests of shouldered test bars according to Polym Chem 3(2012):325-328.

The polymer of the present invention is characterised by three structures: the cured polymer resin, the voids, and the windows that interconnect adjacent voids. The resin is the solidified continuous phase, the voids describe areas where a droplet once resided, and the windows are holes which form in the resin as it polymerises. The latter have the effect of interconnecting adjacent voids.

According to a preferred embodiment of the present invention the three-dimensional porous polymer structure according to the present invention is obtainable by the method described above and exemplified in the examples provided below.

The present invention is further illustrated by the following figures and examples, however, without being restricted thereto.
Fig. 1 shows a SEM image of oxidised DCPD polyHIPE stabilized by 0.25 vol.% surfactant with a nominal pore volume of 80%.
Fig. 2 shows a SEM image of oxidised DCPD polyHIPE stabilized by 1 vol.% surfactant with a nominal pore volume of 80%.
Fig. 3 shows a SEM image of oxidised DCPD polyHIPE stabilized by 3 vol.% surfactant with a nominal pore volume of 80%.
Fig. 4 shows a SEM image of oxidised DCPD polyHIPE stabilized by 5 vol.% surfactant with a nominal pore volume of 80%.
Fig. 5 shows a SEM image of oxidised DCPD polyHIPE stabilized by 7 vol.% surfactant with a nominal pore volume of 80%.
Fig. 6 shows a SEM image of oxidised DCPD polyHIPE stabilized by 10 vol.% surfactant with a nominal pore volume of 80% (see Polym. Chem. 2012, 3, 325).

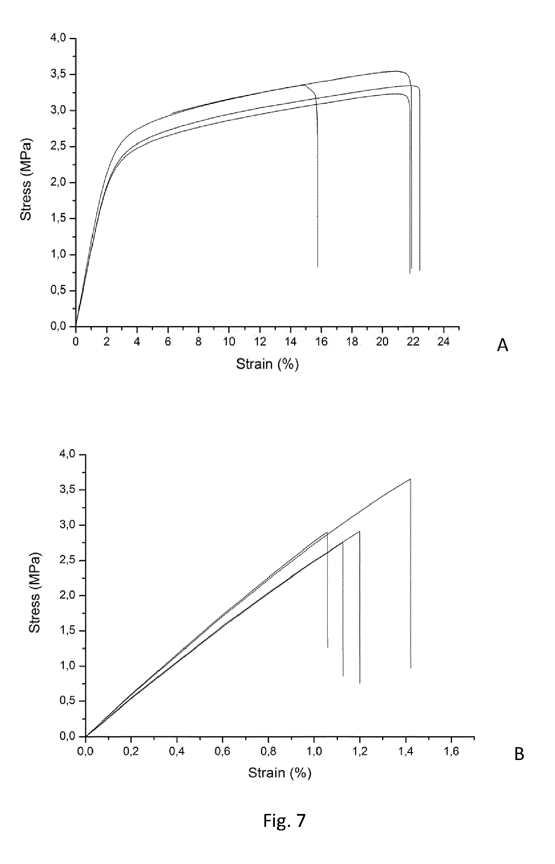

Fig. 7 shows a stress/strain plot of non-oxidised (A) and oxidised (B) DCPD polyHIPE stabilized by 3 vol.% surfactant (see example 3).

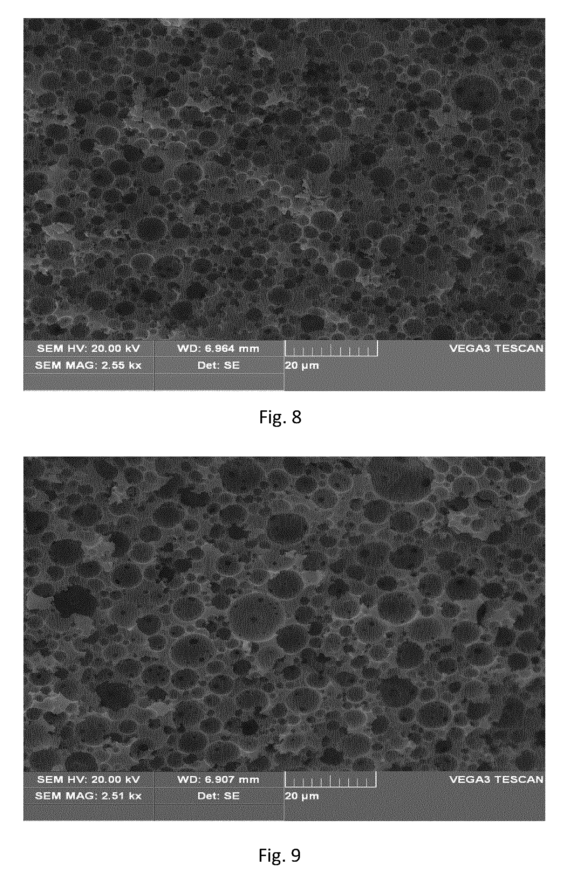

Fig. 8 shows a SEM image of oxidised DCPD polyHIPE stabilized by 3 vol.% surfactant with a nominal pore volume of 50% (see example 6).
Fig. 9 shows a SEM image of oxidised DCPD polyHIPE stabilized by 3 vol.% surfactant with a nominal pore volume of 60% (see example 6).

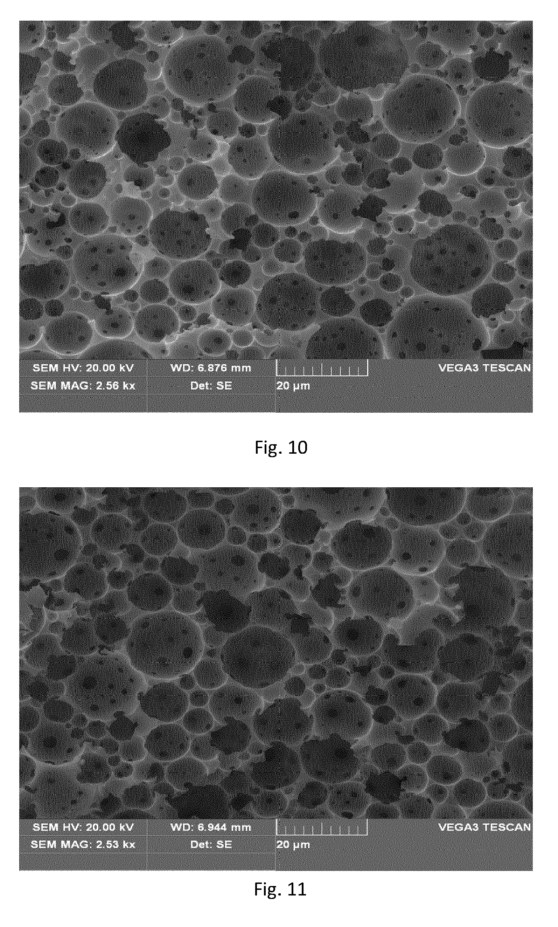

Fig. 10 shows a SEM image of oxidised DCPD polyHIPE stabilized by 3 vol.% surfactant with a nominal pore volume of 70% (see example 6).
Fig. 11 shows a SEM image of oxidised DCPD polyHIPE stabilized by 3 vol.% surfactant with a nominal pore volume of 80% (see example 6).

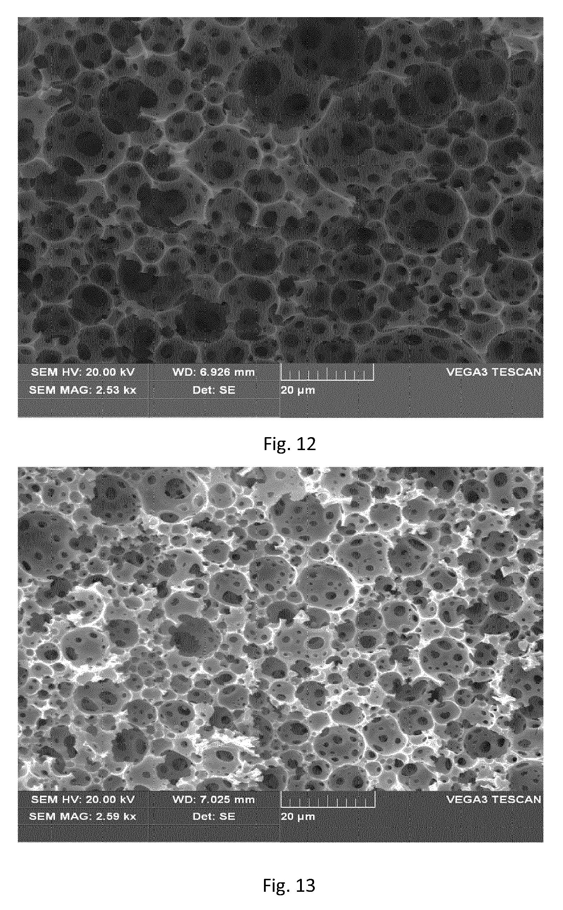

Fig. 12 shows a SEM image of oxidised DCPD polyHIPE stabilized by 3 vol.% surfactant with a nominal pore volume of 90% (see example 6).
Fig. 13 shows a SEM image of oxidised DCPD polyHIPE stabilized by 3 vol.% surfactant with a nominal pore volume of 80% using E1 as initiator (see example 7).

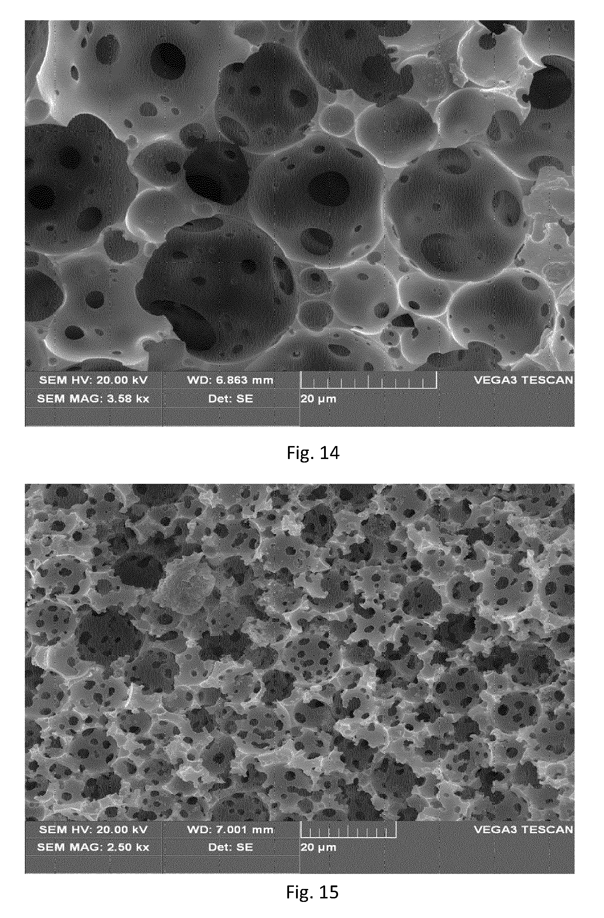

Fig. 14 shows a SEM image of oxidised DCPD polyHIPE stabilized by 3 vol.% surfactant with a nominal pore volume of 80% using M22 as initiator (see example 7).
Fig. 15 shows a SEM image of oxidised DCPD polyHIPE stabilized by 3 vol.% surfactant with a nominal pore volume of 80% using Pluronic P123 as surfactant (see example 8).

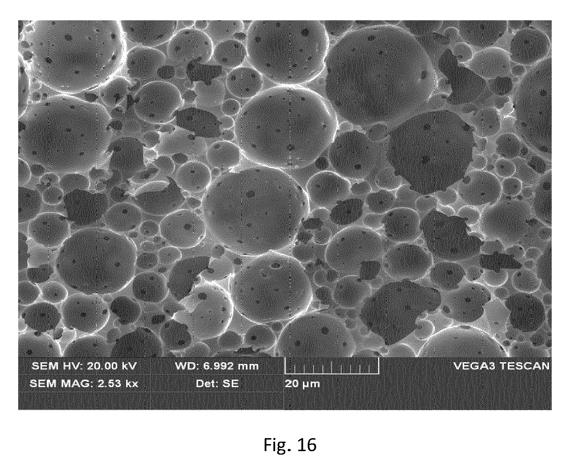

Fig. 16 shows a SEM image of oxidised DCPD polyHIPE stabilized by 3 vol.% surfactant with a nominal pore volume of 80% using Croda L121 as surfactant (see example 8).

### EXAMPLES:

The following examples show the preparation of a low density, open-porous microcellular crosslinked polymeric foam material according to the present invention.

### Example 1: Synthesis of polymer embodiment (polyHIPE) by ring opening metathesis polymerization from a water-in-oil high internal phase emulsion stabilized by 0.25 vol. % of surfactant.

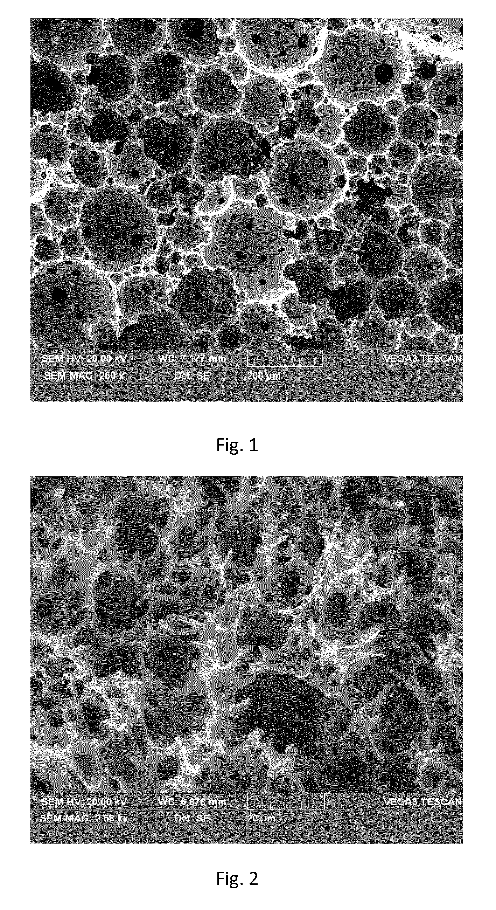

8.00 mL (60 mmol) of dicyclopentadien (Dicyclopentadiene (Sigma-Aldrich)) and 0.02 mL (4.5·10⁻³ mmol) surfactant Pluronic® 121 (poly(ethylene glycol)-*block*-poly(propylene glycol)-*block-*poly(ethylene glycol); *Sigma-Aldrich)* were placed in a reactor and the mixture was stirred with an overhead stirrer at 400 rpm. 33 mL of deionised water was added drop-wise under constant stirring. After addition of water the mixture was stirred for another hour until a uniform emulsion was produced. Solution of initiator (8 mg (8.4·10⁻³ mmol) of 2^{nd} generation of Umicore initiator dissolved in 1mL of toluene; Sigma-Aldrich) was added to the emulsion at the end of stirring (see Fig. 1). Afterwards the HIPE was transferred into a mould (whatever (monolith, beads, membranes or wire) shape is desired) and heated at 80°C. After 4 hours of curing, white and mechanical stable polyHIPE was obtained which was purified via Soxhlet extraction using a sequence of dichloromethane and acetone and was dried in vacuum.

### Example 2: Synthesis of polymer embodiment (polyHIPE) by ring opening metathesis polymerization from a water-in-oil high internal phase emulsion stabilized by 1 vol.% of surfactant.

8.00 mL (60 mmol) of dicyclopentadien (Dicyclopentadiene (Sigma-Aldrich)) and 0.084 mL (1.9·10⁻² mmol) surfactant Pluronic® 121 (poly(ethylene glycol)-*block*-poly(propylene glycol)-*block*-poly(ethylene glycol); *Sigma-Aldrich)* were placed in a reactor and the mixture was stirred with an overhead stirrer at 400 rpm. 33 mL of deionised water was added drop-wise under constant stirring. After addition of water the mixture was stirred for another hour until a uniform emulsion was produced. Solution of initiator (8 mg (8.4·10⁻³ mmol) of 2^{nd} generation of UMICore initiator dissolved in 1mL of toluene; Sigma-Aldrich) was added to the emulsion at the end of stirring (see Fig. 2). Afterwards the HIPE was transferred into a mould (whatever (monolith, beads, membranes or wire) shape is desired) and heated at 80°C. After 4 hours of curing, white and mechanical stable polyHIPE was obtained which was purified via Soxhlet extraction using a sequence of dichloromethane and acetone and was dried in vacuum.

### Example 3: Synthesis of polymer embodiment (polyHIPE) by ring opening metathesis polymerization from a water-in-oil high internal phase emulsion stabilized by 3 vol.% of surfactant.

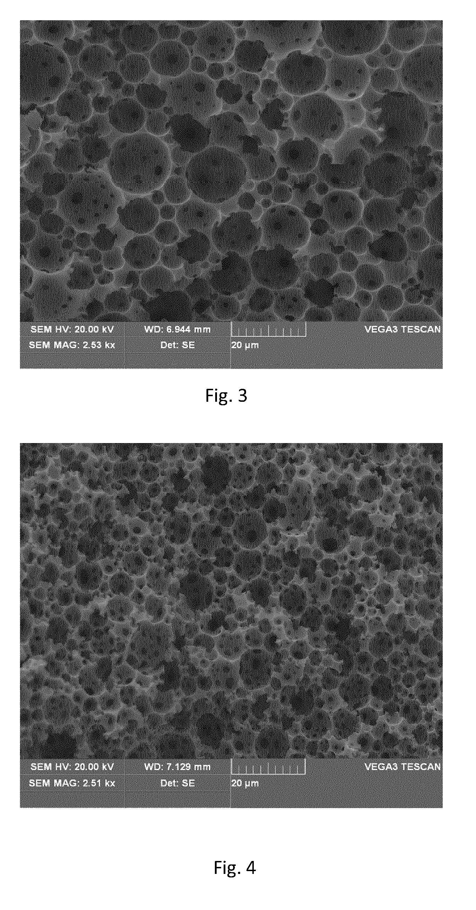

8.00 mL (60 mmol) of dicyclopentadien (Dicyclopentadiene (Sigma-Aldrich)) and 0.248 mL (1.9·10⁻² mmol) surfactant Pluronic® 121 (poly(ethylene glycol)-*block*-poly(propylene glycol)-*block*-poly(ethylene glycol); *Sigma-Aldrich)* were placed in a reactor and the mixture was stirred with an overhead stirrer at 400 rpm. 33 mL of deionised water was added drop wise under constant stirring. After addition of water the mixture was stirred for another hour until a uniform emulsion was produced. Solution of initiator (8 mg (8.4·10⁻³ mmol) of 2^{nd} generation of UMICore initiator dissolved in 1mL of toluene; Sigma-Aldrich) was added to the emulsion at the end of stirring (see Fig. 3). Afterwards the HIPE was transferred into a mould (whatever (monolith, beads, membranes or wire) shape is desired) and heated at 80°C. After 4 hours of curing, white and mechanical stable polyHIPE was obtained which was purified via Soxhlet extraction using a sequence of dichloromethane and acetone and was dried in vacuum.

### Example 4: Synthesis of polymer embodiment (polyHIPE) by ring opening metathesis polymerization from a water-in-oil high internal phase emulsion stabilized by 5 vol.% of surfactant.

8.00 mL (60 mmol) of dicyclopentadien (Dicyclopentadiene (Sigma-Aldrich)) and 0.427 mL (9.8·10⁻² mmol) surfactant Pluronic® 121 (poly(ethylene glycol)-*block*-poly(propylene glycol)-*block*-poly(ethylene glycol); *Sigma-Aldrich)* were placed in a reactor and the mixture was stirred with an overhead stirrer at 400 rpm. 33 mL of deionised water was added drop-wise under constant stirring. After addition of water the mixture was stirred for another hour until a uniform emulsion was produced. Solution of initiator (8 mg (8.4010⁻³ mmol) of 2^{nd} generation of UMICore initiator dissolved in 1mL of toluene; Sigma-Aldrich) was added to the emulsion at the end of stirring (see Fig. 4). Afterwards the HIPE was transferred into a mould (whatever (monolith, beads, membranes or wire) shape is desired) and heated at 80°C. After 4 hours of curing, white and mechanical stable polyHIPE was obtained which was purified via Soxhlet extraction using a sequence of dichloromethane and acetone and was dried in vacuum.

### Example 5: Synthesis of polymer embodiment (polyHIPE) by ring opening metathesis polymerization from a water-in-oil high internal phase emulsion stabilized by 7 vol.% of surfactant used, polymerized by E1 ruthenium initiator.

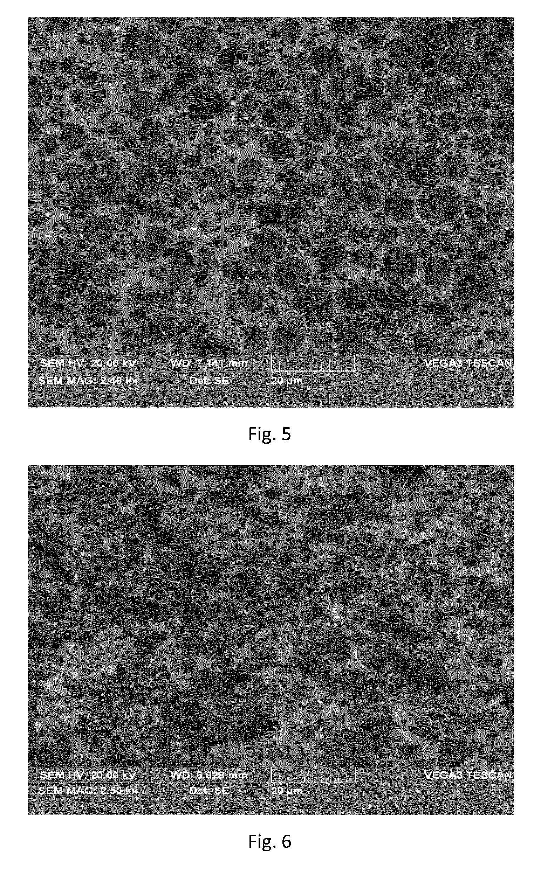

8.00 mL (60 mmol) of dicyclopentadien (Dicyclopentadiene (Sigma-Aldrich)) and 0.610 mL (1.9·10⁻² mmol) surfactant Pluronic® 121 (poly(ethylene glycol)-*block*-poly(propylene glycol)-*block*-poly(ethylene glycol); *Sigma-Aldrich)* were placed in a reactor and the mixture was stirred with an overhead stirrer at 400 rpm. 33 mL of deionised water was added drop wise under constant stirring. After addition of water the mixture was stirred for another hour until a uniform emulsion was produced. Solution of initiator (8 mg (8.4·10⁻³ mmol)) of E1 initiator dissolved in 1mL of toluene; Sigma-Aldrich) was added to the emulsion at the end of stirring (see Fig. 5). Afterwards the HIPE was transferred into a mould (whatever (monolith, beads, membranes or wire) shape is desired) and heated at 80°C. After 4 hours of curing, white and mechanical stable polyHIPE was obtained which was purified via Soxhlet extraction using a sequence of dichloromethane and acetone and was dried in vacuum.

**Table 1. All samples were polymerized with the initiator M2 at pore volume 80% and stabilized with the surfactant Pluronic L121 at different concentrations.**

| **pDCDP₈₀** | **Surf. Amount [vol. %]** | **E-Module [MPa] / ox.** | **E-Module [MPa] / unox.** | **av. void size by SEM [µm]** | **av. window size by SEM [µm]** | **av. window size by Hg [µm]** |
|---|---|---|---|---|---|---|
| Example 1 | 0.25 | 227 | 95 | 100 | 20 | 24.1 |
| Example 2 | 1 | 267 | 97 | 13.5 | 2 | 8.4 |
| Example 3 | 3 | 285 | 105 | 9.5 | 1.9 | 2.7 |
| Example 4 | 5 | 242 | 100 | 7.6 | 1.5 | 1.8 |
| Example 5 | 7 | 239 | 87 | 8.4 | 1.6 | 1.3 |
| Reference ^{a} | 10 | 130 | 23 | 3.4 | 0.8 | 1.1 |

| | | | | | | |
|---|---|---|---|---|---|---|
| ^{a} Data from Polym. Chem. 2012, 3, 325. | | | | | | |

*Example 6: Synthesis of polymer embodiment (polyMIPE or polyHIPE) by ring opening metathesis polymerization from a water-in-oil high internal phase emulsion stabilized by 3 vol.% of surfactant used, at internal*/*continuous phase volume ratio of 50*/*60*/*70*/*80*/*90 vol.% of the internal phase.* 8.00 mL (60 mmol) of dicyclopentadien (Dicyclopentadiene (Sigma-Aldrich)) and 0.248 mL (1.9·10⁻² mmol) surfactant Pluronic® 121 (poly(ethylene glycol)*-block-*poly(propylene glycol)-*block*-poly(ethylene glycol); *Sigma-Aldrich)* were placed in a reactor and the mixture was stirred with an overhead stirrer at 400 rpm. 8/12/19/33 (for 80%)/75(for 90%) mL of deionised water was added drop-wise under constant stirring. After addition of water the mixture was stirred for another hour until a uniform emulsion was produced. Solution of initiator (8 mg (8.4·10⁻³ mmol) of 2^{nd} generation of UMICore initiator dissolved in 1mL of toluene; Sigma-Aldrich) was added to the emulsion at the end of stirring. Afterwards the HIPE was transferred into a mould (whatever (monolith, beads, membranes or wire) shape is desired) and heated at 80°C. After 4 hours of curing, white and mechanical stable polyHIPE was obtained which was purified via Soxhlet extraction using a sequence of dichloromethane and acetone and was dried in vacuum.

**Table 2. All samples were polymerized with the initiator M2 and stabilized with 3 vol.% of the surfactant Pluronic L121 at different porosities.**

| **3 vol.% of surf.** | **Pore volume [%]** | **E-Module [MPa] / ox.** | **E-Module [MPa] / unox.** | **av. void size by SEM [µm]** | **av. window size by SEM [µm]** | **av. window size by Hg [µm]** |
|---|---|---|---|---|---|---|
| Example 6.1 | 50 | 883 | 392 | 4.3 | 0.85 | 0.8 |
| Example 6.2 | 60 | 666 | 266 | 5.3 | 1.1 | 1.1 |
| Example 6.3 | 70 | 409 | 178 | 7.7 | 1.5 | 1.6 |
| Example 6.4 | 80 | 285 | 105 | 9.5 | 1.9 | 2.7 |
| Example 6.5 | 90 | 90 | 27 | 10.4 | 2.1 | 3.4 |

### Example 7: Synthesis of polymer embodiment (polyHIPE) by ring opening metathesis polymerization from a water-in-oil high internal phase emulsion stabilized by 3 vol.% of surfactant used, polymerized by different ruthenium initiators.

8.00 mL (60 mmol) of dicyclopentadiene (Sigma-Aldrich) and 0.248 mL (1.9·10⁻² mmol) surfactant Pluronic® 121 (poly(ethylene glycol)-*block*-poly(propylene glycol)-*block*-poly(ethylene glycol); *Sigma-Aldrich)* were placed in a reactor and the mixture was stirred with an overhead stirrer at 400 rpm. 33 mL of deionised water was added drop wise under constant stirring. After addition of water the mixture was stirred for another hour until a uniform emulsion was produced. Solution of initiator (8 mg (8.4·10⁻³ mmol) of E1 initiator dissolved in 1mL of toluene; Sigma-Aldrich) was added to the emulsion at the end of stirring. Afterwards the HIPE was transferred into a mould (whatever (monolith, beads, membranes or wire) shape is desired) and heated at 80°C. After 4 hours of curing, white and mechanical stable polyHIPE was obtained which was purified via Soxhlet extraction using a sequence of dichloromethane and acetone and was dried in vacuum.

**Table 3. Pore volume of all samples was 80% and was stabilized with 3 vol.% of the surfactant according to monomer used.**

| **3 vol.% of surf. pDCDP₈₀** | **initiator** | **surfactant** | **E-Module [MPa] / un-ox.** | **av. void size by SEM [µm]** | **av. window size by SEM [µm]** |
|---|---|---|---|---|---|
| Example 7.1 | E1 | Pluronic L121 | 98 | 8.5 | 1.7 |
| Example 7.2 | M22 | Pluronic L121 | 110 | 13.5 | 2.7 |

### Example 8: Synthesis of polymer embodiment (polyHIPE) by ring opening metathesis polymerization from a water-in-oil high internal phase emulsion stabilized by 3 vol.% of different surfactants.

8.00 mL (60 mmol) of dicyclopentadiene (Sigma-Aldrich) and 0.248 mL (1.9·10⁻² mmol) surfactant Pluronic® 121 (poly(ethylene glycol)-*block*-poly(propylene glycol)-*block*-poly(ethylene glycol); *Sigma-Aldrich)* or Pluronic® 123 (poly(ethylene glycol)-block-poly(propylene glycol)-*block*-poly(ethylene glycol); Mₙ = 5800 gmol⁻¹; *Sigma-Aldrich) ,* or Synperonic™ PE/L121 (poly(ethylene glycol)-*block*-poly(propylene glycol)-*block-*poly(ethylene glycol); Mₙ = 4400 gmol⁻¹; *Croda*) were placed in a reactor and the mixture was stirred with an overhead stirrer at 400 rpm. 33 mL of deionised water was added drop wise under constant stirring. After addition of water the mixture was stirred for another hour until a uniform emulsion was produced. Solution of initiator (8 mg (8.4·10⁻³ mmol) of 2^{nd} generation of UMICore initiator dissolved in 1mL of toluene; Sigma-Aldrich) was added to the emulsion at the end of stirring. Afterwards the HIPE was transferred into a mould (whatever (monolith, beads, membranes or wire) shape is desired) and heated at 80°C. After 4 hours of curing, white and mechanical stable polyHIPE was obtained which was purified via Soxhlet extraction using a sequence of dichloromethane and acetone and was dried in vacuum.

**Table 4. Pore volume of all samples was 80% and was stabilized with 3 vol.% of the surfactant according to monomer used.**

| **3 vol.% of surf. pDCDP₈₀** | **initiator** | **surfactant** | **E-Module [MPa] / unox.** | **av. void size by SEM [µm]** | **av. window size by SEM [µm]** |
|---|---|---|---|---|---|
| Example 8.1 | M2 | Pluronic P123 | 70 | 9.4 | 1.8 |
| Example 8.2 | M2 | Croda L121 | 118 | 12.2 | 2.4 |

## Claims

1. A method for producing a three-dimensional porous structure comprising the step of polymerizing at least one polymerizable monomer in a monomer phase of a monomer-in-water high internal phase emulsion in the presence of a polymerization initiator, wherein the at least one polymerizable monomer is at least one polymerizable multicyclic olefin monomer with at least two cycloolefin rings with at least two reactive double bonds and wherein the emulsion comprises a surfactant in the range of 0.1 vol.% to 8 vol.% based on the quantity of the polymerizable monomer in the emulsion.

2. Method according to claim 1, wherein the polymerizable multicyclic olefin monomer is selected from the group consisting of dicyclopentadiene, norbornene, norbornadiene, cyclooctene, cyclooctadiene, 5-ethylidene-2-norbornene and combinations thereof.

3. Method according to claim 2, wherein the polymerizable multicyclic olefin monomer is dicyclopentadiene, which is combined with at least one polymerizable multicyclic olefin monomer selected from the group consisting of norbornene, norbornadiene, cyclooctene, cyclooctadiene and 5-ethylidene-2-norbornene.

4. Method according to claim 2 or 3, wherein the monomer phase comprises 50% to 100%, preferably 60% to 100%, more preferably 70% to 100%, even more preferably 80% to 100%, dicyclopentadiene and 0% to 50%, preferably 0% to 40%, more preferably 0% to 30%, even more preferably 0% to 20%, at least one polymerizable multicyclic olefin monomer selected from the group consisting of norbornene, norbornadiene, cyclooctene, cyclooctadiene and 5-ethylidene-2-norbornene.

5. Method according to any one of claims 1 to 4, wherein the polymerization initiator is activated at a temperature of at least 40°C, preferably of at least 50°C, more preferably of at least 60°C.

6. Method according to any one of claims 1 to 4, wherein the polymerization initiator is a ruthenium carbene metathesis initiator, preferably selected from the group consisting of (H2IMes)-(PCy3)Cl2Ru(3-phenyl-indenylid-1-ene) (H2Imes = N,N-bis(mesityl) 4,5-dihydroimidazol-2-yl), (SPY-5-34)-dichloro-(K2(C,O)-(2-iso-propyl ester-5-methoxy benzylidene)-(1,3-bis(2,4,6- trimethylphenyl)-4,5-dihydroimidazol-2-ylidene)-ruthenium and combinations thereof.

7. Method according to any one of claims 1 to 6, wherein the surfactant has a molecular weight of 500 to 10000 g/mol, preferably of 1000 to 8000 g/mol, even more preferably of 2000 to 5000 g/mol.

8. Method according to any one of claims 1 to 7, wherein the surfactant is selected from the group consisting of poloxamers, preferably (poly(ethylene glycol)-block-poly(propylene glycol)-block-poly(ethylene glycol).

9. Method according to any one of claims 1 to 8, wherein the total pore volume in respect to the overall volume of the at least one polymerizable monomer varies from 40% to 90%, preferably from 50% to 90%, more preferably from 70% to 90%, even more preferably from 80% to 90%.

10. A three-dimensional porous polymer structure comprising voids having an average void size of more than 4 µm and an average window size between 1 and 50 µm.

11. Structure according to claim 10, wherein the voids have an average void size of more than 7.5 µm, preferably more than 9 µm.

12. Structure according to claim 10 or 11, **characterised in that** the voids have an average void size of 5 to 150 µm, preferably of 7.5 to 150 µm, more preferably of 9 to 130 µm, even more preferably of 10 to 120 µm.

13. Structure according to any one of claims 10 to 12, wherein the voids have an average window size between 1 and 40 µm, preferably between 1 and 25 µm, more preferably between 1 and 20 µm, even more preferably between 1 and 10 µm.

14. Structure according to any one of claims 10 to 13, wherein the elastic modulus of the oxidized structure is at least 170 MPa, preferably at least 200 MPa and even more preferably at least 400 MPa.

15. Structure according to any one of claims 10 to 14 obtainable by a method according to any one of claims 1 to 9.
